# EUROPEAN PATENT APPLICATION

(11) **EP 4 703 125 A1**
(43) Date of publication of application: **04.03.2026**
(21) Application number: 25199433.1
(22) Date of filing: 01.09.2025
(51) Int. Cl.: B29C 65/02, B29C 65/00, B60J 5/10, B29D 24/00, B32B 3/28, B32B 27/06, B29L 7/00, B29L 24/00, B29L 31/30

(54) **THERMOPLASTIC WELD AROUND HOLES**

(30) Priority: 03.09.2024 US 202463690113 P
(71) Applicant: Magna Exteriors Inc., Aurora ON L4G 7K1 (CA)
(72) Inventor: Kuntze, Christopher J., AURORA, L4G 7K1 (CA); Gillard, Laurent, AURORA, L4G 7K1 (CA); Salzmann, Heiner, Metamora, Michigan, 48455 (US)
(74) Representative: Witte, Weller & Partner Patentanwälte mbB

(57) **Abstract**

Splitting a thermoplastic weld and routing the weld around both sides of an attachment hole thereby maintaining good structure and attachment through two panels and avoiding secondary operations and secondary components. Thermoplastic welding incorporating at least one raised welding rib operable surrounding a plurality of attachment holes.

A panel component operably adapted for a vehicle, comprising:

an inner panel (12);

an outer panel (14);

at least one aperture (22) of predetermined shape operably adapted to provide an attachment hole for said inner and outer panel; and,

a thermoplastic weld (20) including a raised welding surface (24) surrounding each of the at least one apertures (22), said raised welding surface material is operably split in a predetermined location and operably routed around all sides of the at least one aperture (22) to create a weld joint (26) of predetermined higher quality and durability.

## Description

### CROSS-REFERENCE TO RELATED APPLICATIONS

This application is a Non-Provisional Patent Application and claims benefit of United States Provisional Patent Application No. 63/690,113, filed September 3, 2024. The disclosure of the above application is incorporated herein by reference.

### FIELD OF THE INVENTION

The present invention relates to a thermoplastic weld around at least one predetermined feature and method for thermoplastic welding around at least one predetermined feature.

### BACKGROUND OF THE INVENTION

Attaching two panels together with threaded fasteners through-holes can lead to concerns especially when needing good structure, a water and airtight joint, and dimensional control. Typically, a bonded or welded structure would fall on one side of the hole to avoid secondary operations to clean the hole out and this adds cost and build variation. If only attaching on one side of the hole, the fastener will not get good structure, and the panels will distort when the fastener is installed, and this causes dimensional concerns, and a loose joint. Water leaks, air leaks, loose joints, panel distortion, dimensional concerns, secondary operations, and increased cost are some of the concerns.

Secondary components such as brackets, adhesive, tapes, caulks, butal, butyl, foam, seals, etc. could help eliminate the non-weld areas, but secondary operations and components drive the costs up, and could also drive the quality down and allow for poor-quality builds or durability concerns.

Accordingly, there is a need to create a thermoplastic welded joint that resolves all the problems and concerns noted above.

### SUMMARY OF THE INVENTION

The present invention provides thermoplastic welded joints including operably splitting a thermoplastic weld, e.g., a raised welding rib, and routing it around the at least one attachment aperture, e.g., to surround a hole, maintaining good structure and attachment through coupled parts, e.g., coupled first panel and second panel, avoiding secondary operations, and avoiding secondary components. Thermoplastic welding incorporating at least one raised welding rib operably disposed to surround a plurality of attachment holes.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of a panel assembly incorporating a plurality of apertures and an exemplary raised welding rib, in accordance with the present invention;
Figure 2 is a perspective view of a panel assembly incorporating a plurality of apertures and an exemplary raised welding rib, in accordance with the present invention; and
Figure 3 is a cross-sectional view taken at 3-3 of Fig. 1.

### DETAILED DESCRIPTION OF THE PREFERRED EMBODIMENTS

The following description of the preferred embodiment(s) is merely exemplary in nature and is in no way intended to limit the invention, its application, or uses.

The present invention is directed to splitting at least one thermoplastic weld and routing each weld around a plurality of sides of at least one attachment hole, respectively, such that predetermined good structure is maintained, attachment through at least two panels is achieved, and secondary operations and secondary components are avoided, in accordance with aspects of the present invention.

The present invention provides a simpler attachment feature design with minimal cost impact with a one step process, and no secondary operations or secondary components are needed, provides an airtight and watertight joint, a solid and balanced structure, dimensional control, a fastening that maintains a solid balanced joint, and where there is no added time required to produce this attachment feature.

The present invention provides a plastic weld, e.g., thermoplastic weld joint, around at least one predetermined aperture (e.g., an opening, a plurality of holes, etc.), and method for thermoplastic welding around at least one predetermined aperture.

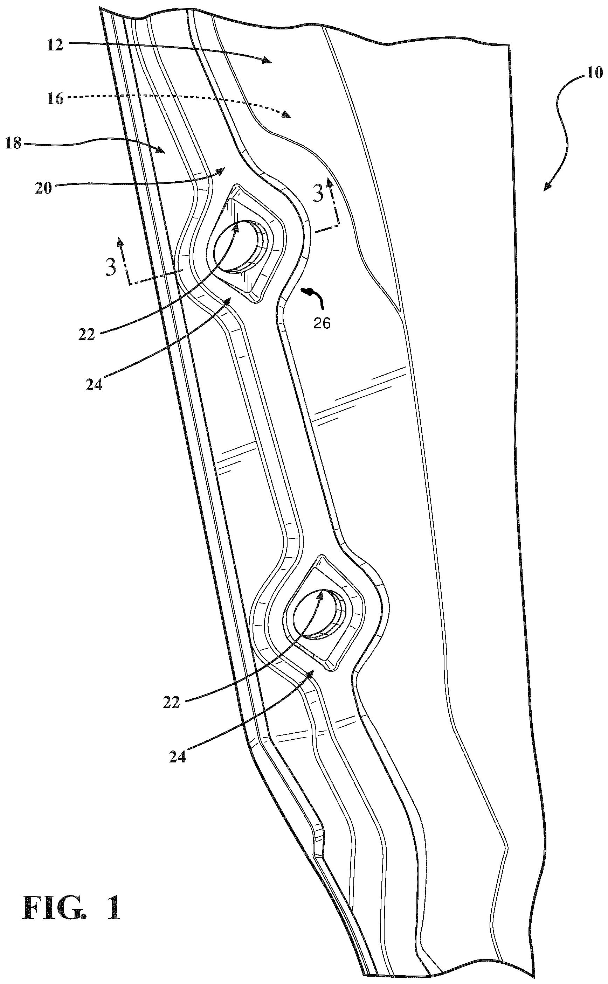

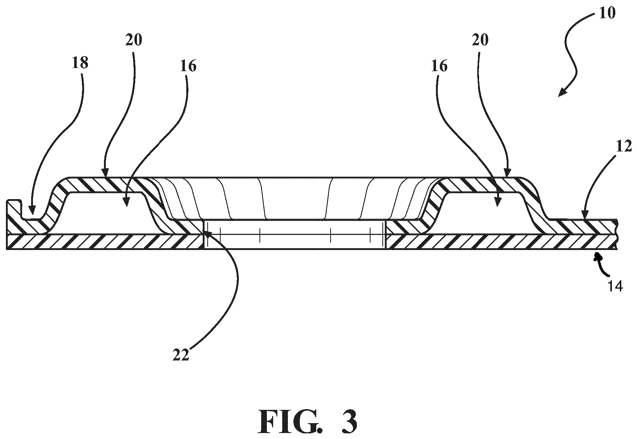

Referring to Figures 1-3 generally, the Figures depict an exemplary raised thermoplastic welding surface split and routed around the hole, and then comes back together to completely surround the hole and create a good sealed and solid structure with good dimensional control. The panel assembly incorporates a plurality of apertures and at least one raised welding rib, in accordance with aspects of the present invention.

A panel assembly incorporating a weld joint shown generally at 10, in accordance with the present invention, includes at least one first panel shown generally at 12, e.g., inner panel, at least one second panel indicated generally at 14, e.g., outer panel, at least one aperture 22, e.g., attachment holes, and at least one raised welding member or portion shown generally at 20, e.g., rib. Preferably, there are a plurality of apertures 22 of predetermined operable profile, each aperture 22 with a respective adjacent raised welding member 20. Preferably, the raised welding member 20 generally spans between the plurality of apertures 22 and includes a surrounding raised welding surface shown generally at 24, e.g., rib, around each aperture 22. An exemplary interior dry area is shown generally at 16 and an exemplary exterior wet area is shown generally at 18.

The first and second panels 12 and 14 and raised welding member 20 are predetermined plastic material(s), most preferably, forming a predetermined thermoplastic welding joint, indicated generally at 26.

An exemplary surrounding raised welding surface 24 profile is depicted in Figure 1 that is generally eye-like shaped. It is understood that the raised welding member 20/surface 24 are any predetermined shapes suitable to form a welding joint depending on the particular application without departure from the scope of the present invention, e.g., oblong, circular, concentric with the aperture 22 predetermined shape, etc. Preferably, the apertures are generally substantially round.

In thermoplastic welding, the raised welding rib 20 is operably split and surrounds the attachment holes 22 with part of the rib surrounding one half, and the other part, e.g., half, of the rib surrounding the other half of the aperture 22.

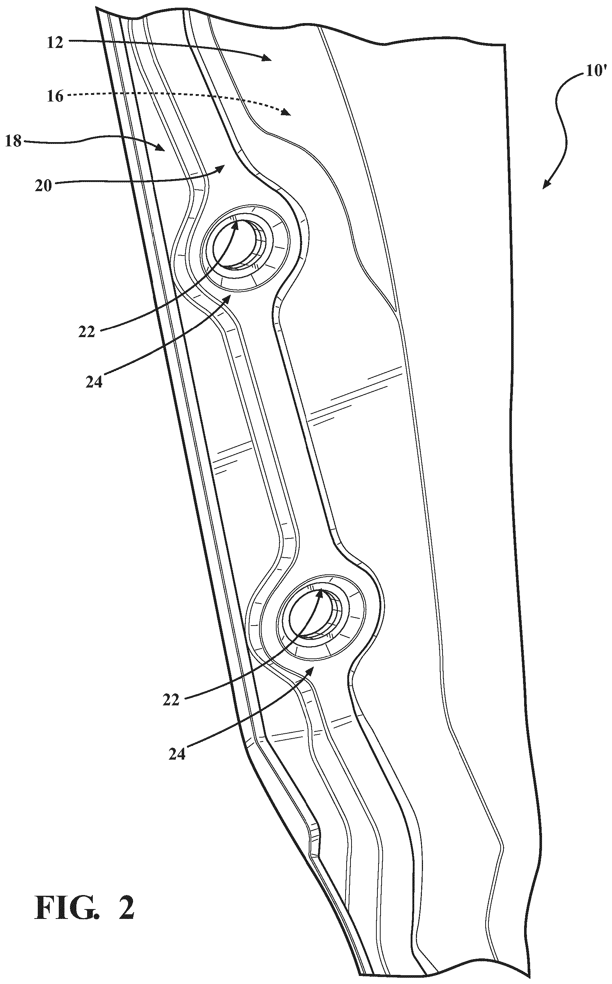

A panel assembly 10' including an exemplary surrounding raised welding surface 24 profile is depicted in Figure 2 that is generally round shaped. It is understood that other shapes could be used without departure from the scope of the present invention.

It is understood that the raised welding member 20 can be a rib or any suitable alternative shape and dimensions suitably adapted for thermoplastic welding at least one first panel and at least one second panel and incorporating attachment apertures 22.

While a substantially round shape around holes 22 is described, it is understood that any other predetermined shape is contemplated without departure from the scope of the present invention. The apertures 22 are operable for each selectively receiving at least one fastener member, e.g., thermoplastic material, bolt, screw, clip, thermoplastic plug, etc., suitable depending on the particular application. The apertures 22 are operably adapted for thermoplastic welding the first and second panels together.

It is understood that the present invention is operably adaptable for thermoplastic welding through and/or around and/or over any predetermined feature including, but not limited to, a plurality of apertures, at least one ridge, boss, hole, groove, slit, channel, opening, recess, track, at least one attachment feature, etc., and any combinations thereof. It is further understood that the present invention is operably adaptable for any predetermined plastic to be welded.

The thermoplastic welded part is operably adapted for a vehicle, e.g., panel, tailgate, liftgate, liftgate panel, door, bulkhead, roof, trunk, hood, instrument panel, etc.

It is understood that the thermoplastic weld joint and aperture profiles are operably adaptabtable for selectively receiveing at least one predetermined fastener for at least one additional part, e.g., an accessory, hinge, structural panel or assembly reinforcement, latch plate, tether, struts, lift supports, lift assists, and/or any other suitable additional components, according to aspects of the present invention without departure from the scope of the present invention.

The description of the invention is merely exemplary in nature and, thus, variations that do not depart from the gist of the invention are intended to be within the scope of the invention. Such variations are not to be regarded as a departure from the spirit and scope of the invention.

## Claims

1. A panel component operably adapted for a vehicle, comprising:
an inner panel;
an outer panel;
at least one aperture of predetermined shape operably adapted to provide an attachment hole for said inner and outer panel; and,
a thermoplastic weld including a raised welding surface surrounding each of the at least one apertures, said raised welding surface material is operably split in a predetermined location and operably routed around all sides of the at least one aperture to create a weld joint of predetermined higher quality and durability.

2. The panel component of claim 1, wherein said thermoplastic weld provides attachment though both said inner panel and outer panel.

3. The panel component of claim 1 or 2, wherein said split of the thermoplastic weld and routing it around the sides of the attachment hole maintain good structure and attachment through both inner and outer panels, avoids secondary operations, and avoids secondary components selected from the group consisting of brackets, adhesive, tapes, caulks, butal, foam, and seals.

4. The panel component of any of claims 1 to 3, wherein said weld joint is an air tight and water tight joint.

5. The panel component of any of the preceding claims, wherein said raised welding surface is eye-like shaped.

6. The panel component of any of the preceding claims, wherein said raised welding surface is substantially round.

7. The panel component of any of the preceding claims, wherein said thermoplastic weld is a rib.

8. The panel component of claim 7, comprising a plurality of said apertures, wherein said thermoplastic weld is a raised rib interconnecting said plurality of apertures and raised welding surfaces surrounding each of said plurality of apertures.

9. The panel component of any of the preceding claims, wherein said at least one aperture of predetermined shape is operably adapted to provide an attachment hole for said inner and outer panel and, optionally, additionally predetermined components.

10. The panel of any of the preceding claims, wherien said inner panel is a liftgate panel.

11. A panel incorporating a thermoplastic weld operably adapted for a vehicle, comprising:
at least one first panel;
at least one second panel;
a plurality of aperatures through said first and/or second panels; and,
at least one raised welding member located around each aperture to completely surround each aperture and create a thermoplastic weld joint of improved sealed and solid structure with improved dimensional control.

12. The panel component of claim 11, wherein
said at least one welding member is at least one rib; and/or
said plurality of apertures are of predetermined shape operably adapted to provide an attachment hole for at least said first and second panel; and/or
said thermoplastic weld joint is a water and air resistant sea; and/or
said raised welding member includes at least one raised welding surface that is human eye-like shaped; and/or
said raised welding member includes a substantially round portion surrounding each aperture; and/or
said plurality of apertures are attachment holes.

13. The panel component of claim 12, wherein said at least one welding member is a raised rib interconnecting said plurality of apertures and includes welding surfaces surrounding each of said plurality of apertures.

14. The panel of claim 12, wherien said said first or second panel is a liftgate panel.

15. Manufacturing a panel assembly operably adapted for a vehicle, comprising:
providing at least one first panel;
providing at least one second panel, said first and/or second panel poerably incorporating at least one raised welding member of thermoplastic material; and,
forming a plurality of aperatures through said first and/or second panel, said at least one raised welding member located between said plurality of apertures and operably split to route around each aperture, and operably coming back together at the other side of said aperture to completely surround each aperture creating a thermoplastic weld joint of predetermined higher quality, durability, water and air seal, and dimensional control.
